# FASCICULE DE BREVET EUROPEEN

(11) **EP 4 172 011 B1**
(45) Date de publication et mention de la délivrance du brevet: **30.07.2025**
(21) Numéro de dépôt: 21733960.5
(22) Date de dépôt: 16.06.2021
(51) Int. Cl.: B60T 8/1761, B60T 13/74

(54) **PROCÉDÉ DE FREINAGE AMÉLIORÉ D'UN VÉHICULE**
VERBESSERTES BREMSVERFAHREN FÜR EIN FAHRZEUG
IMPROVED BRAKING METHOD FOR A VEHICLE

(30) Priorité: 24.06.2020 FR 2006586
(43) Date de publication de la demande: 03.05.2023
(73) Titulaire: Hitachi Astemo France, 93700 Drancy (FR)
(72) Inventeur: SASSO, Julien, 77420 CHAMPS SUR MARNE (FR); PATRÃO CARQUEIJÓ, Alex, 93500 PANTIN (FR); DACLAT, Julien, 77127 LIEUSAINT (FR)
(74) Mandataire: LLR
(86) Numéro de dépôt international: PCT/EP2021/066310
(87) Numéro de publication internationale: WO 2021/259736

(56) Documents cités:
- WO-A2-02/26539
- DE-A1- 19 537 464
- DE-A1- 19 548 560
- DE-T5- 112017 000 460
- FR-A1- 3 073 187

## Description

L'invention se rapporte à un procédé de freinage de véhicule. Plus particulièrement, l'invention concerne un procédé de freinage permettant de réduire le temps de freinage du véhicule.

Un véhicule comprend généralement un système de freinage, par exemple un système de freinage à disque plus communément appelé « frein à disque » ou un système de freinage à tambour plus communément appelé « frein à tambour », comportant des moyens de friction reliés à un organe d'actionnement apte à déplacer les moyens de friction en direction d'un organe de freinage fixé à une roue du véhicule. Cela a pour but de mettre les moyens de friction, par exemple des garnitures ou plaquettes de frein, en contact avec l'organe de freinage pour freiner le véhicule par friction ou de les écarter de l'organe de freinage dans le but de cesser le freinage. L'organe d'actionnement est en général couplé à des moyens de transmission destinés à entrainer le déplacement des moyens de friction au moyen de l'énergie fournie par l'organe d'actionnement. Lorsque le système de freinage est un frein à disque, l'organe de freinage est formé par un disque solidaire en rotation de la roue. Dans le cas où le système de freinage est un frein à tambour, l'organe de freinage est formé par un tambour solidaire en rotation de la roue.

Lorsque le véhicule roule à une vitesse suffisamment importante, l'application du freinage peut avoir pour effet de bloquer une ou plusieurs roues pendant que le véhicule ralentit. Cependant, si ce blocage perdure sur une durée suffisamment importante, les frottements font monter la température des moyens de friction et de l'organe de freinage, ce qui, à terme, réduit la durée de vie de ces moyens et organe. En outre, le glissement prolongé de la roue bloquée sur la route a pour effet de créer une fusion locale de la couche de gomme de la roue en contact de la route. A partir de ce moment-là, la roue glisse sur la route avec peu de frottement, ce qui fait que le véhicule ne ralentit presque plus. En d'autres termes, maintenir le blocage d'une ou plusieurs des roues réduit considérablement l'efficacité du freinage du véhicule.

On connait de l'état de la technique le système dit ABS, sigle pour le terme allemand « Antiblockiersystem » qu'on peut traduire en français par système anti-blocage des roues. Ce système, bien connu de l'homme du métier, permet de détecter le blocage d'une roue et en conséquence de réduire l'intensité du freinage, ce qui permet de débloquer la roue et permettre au conducteur du véhicule de garder une certaine manœuvrabilité du véhicule pendant le freinage. Un exemple de système ABS est décrit dans le document WO 02 26539 A2. Un exemple d'utilisation de modulation de largeur d'impulsion pour actionner un frein électrique est donné dans le document FR 30 73 187 A1.

Ce système est intéressant mais peut ne pas suffire pour optimiser le temps de freinage du véhicule, notamment lorsque ce dernier roule à une vitesse importante et dans certaines conditions climatiques.

L'invention a notamment pour but de proposer un procédé de freinage permettant de réduire davantage le temps de freinage du véhicule.

A cet effet, on prévoit selon l'invention un procédé de freinage d'un véhicule dans lequel un moteur électrique entraine en mouvement des moyens de friction en direction d'un organe de freinage solidaire d'une roue du véhicule, un processeur commandant une alimentation en énergie du moteur électrique par modulation de largeur d'impulsion.

Ainsi, grâce à l'alimentation du moteur électrique par modulation de largeur d'impulsion, on module la puissance du freinage et donc on empêche ou limite le blocage des roues. En étalonnant préalablement la modulation de largeur d'impulsion, on optimise donc le temps de freinage du véhicule.

Le procédé comprend une première phase dans laquelle le rapport cyclique de modulation α1 est fixé à 100% et une deuxième phase dans laquelle le rapport cyclique de modulation α₂ est fixé à une valeur prédéterminée strictement comprise entre 0 et 100%.

Selon un mode de réalisation, on prévoit une première phase durant laquelle la puissance de freinage est maximale et durant laquelle les roues ne se bloqueront pas ou se bloqueront peu. Et après cela, on réduit la puissance du freinage grâce à la modulation par largeur d'impulsion pour éviter le blocage des roues tout en continuant de freiner le véhicule.

Avantageusement, le procédé comprend au moins une phase supplémentaire, faisant suite à la deuxième phase, dans laquelle le rapport cyclique de modulation α₃ est fixé à une valeur prédéterminée strictement comprise entre α₂ et 100%.

Ainsi, après la deuxième phase, on augmente le rapport cyclique de modulation de manière à rendre le freinage plus intense lorsque le véhicule a déjà freiné de manière importante. En dernière partie de freinage, il est moins critique de bloquer les roues car la fusion locale de la gomme a moins de temps pour se produire. On intensifie donc le freinage lors de la troisième phase jusqu'à l'arrêt du véhicule.

Avantageusement, à partir du début de la deuxième phase, on fait évoluer le rapport cyclique de modulation selon une fonction f prédéterminée du temps, par exemple une fonction croissante du temps.

On permet ainsi une évolution, continue ou discrète, du rapport cyclique de modulation, ce qui permet d'optimiser plus finement le freinage du véhicule.

On prévoit également selon l'invention un procédé d'étalonnage d'un dispositif de freinage d'un véhicule, dans lequel :
a) on fait rouler le véhicule à une vitesse prédéterminée,
b) on met en œuvre un procédé de freinage, du véhicule, tel que décrit dans ce qui précède,
c) on mesure le temps de freinage du véhicule,
d) on modifie au moins un paramètre choisi parmi la liste suivante : rapport cyclique de modulation lors de la deuxième phase α₂, fonction f, durée de la première phase, durée de la deuxième phase,
e) on répète les étapes a) à c), et
f) on répète les étapes a) à e) jusqu'à ce que le temps de freinage soit inférieure à une valeur prédéterminée.

Ce procédé d'étalonnage permet de moduler les paramètres, mis en œuvre dans le procédé de freinage selon l'invention, afin de réduire le temps de freinage à une vitesse et dans des conditions prédéfinies. Selon un mode de réalisation, on prévoit de stocker des réglages différents pour ces paramètres en fonction de conditions prédéfinies, par exemple des conditions de vitesse ou météorologiques (notamment en température et en humidité) ou bien des conditions de freinage d'urgence par exemple identifiables par un actionnement brutal et soudain de l'organe d'actionnement tel qu'une pédale de frein.

Cet étalonnage permet de mettre en place une stratégie, nouvelle, de serrage dynamique des moyens de friction sur l'organe de freinage utilisant une technique de modulation de largeur d'impulsion. Une application de cette stratégie de serrage est la réduction du temps de freinage en situation d'urgence du véhicule.

On prévoit aussi selon l'invention un dispositif de freinage pour un véhicule comprenant :
- un organe de freinage,
- des moyens de friction aptes à venir en contact avec l'organe de freinage,
- un moteur électrique apte à entrainer les moyens de friction en mouvement en direction de l'organe de freinage, et
- un processeur configuré pour commander l'alimentation en énergie du moteur électrique par modulation de largeur d'impulsion.

Le processeur est configuré pour commander l'alimentation en énergie du moteur électrique selon une première phase dans laquelle le rapport cyclique de modulation α1 est fixé à 100% puis selon une deuxième phase dans laquelle le rapport cyclique de modulation α2 est fixé à une valeur prédéterminée strictement comprise entre 0 et 100%.

Avantageusement, le processeur est configuré pour commander l'alimentation en énergie du moteur électrique selon au moins une phase supplémentaire, faisant suite à la deuxième phase, dans laquelle le rapport cyclique de modulation α3 est fixé à une valeur prédéterminée strictement comprise entre α2 et 100%.

Avantageusement, le processeur est configuré pour commander l'alimentation en énergie du moteur électrique en faisant évoluer le rapport cyclique de modulation selon une fonction f prédéterminée du temps, par exemple une fonction croissante du temps, à partir du début de la deuxième phase.

### Brève description des figures

On va maintenant décrire un mode de réalisation de l'invention, donné uniquement à titre d'exemple, en se référant aux dessins annexés dans lesquels :
[Fig.1] la [Fig.1] est un schéma illustrant un dispositif de freinage selon l'invention,
[Fig.2] la [Fig.2] est un graphique illustrant l'évolution de la vitesse d'un véhicule et de l'effort de freinage en fonction du temps lors de la mise en œuvre d'un procédé de freinage selon l'invention, et
[Fig.3] la [Fig.3] est un ordinogramme illustrant la mise en œuvre d'un procédé d'étalonnage selon l'invention.

### Description détaillée

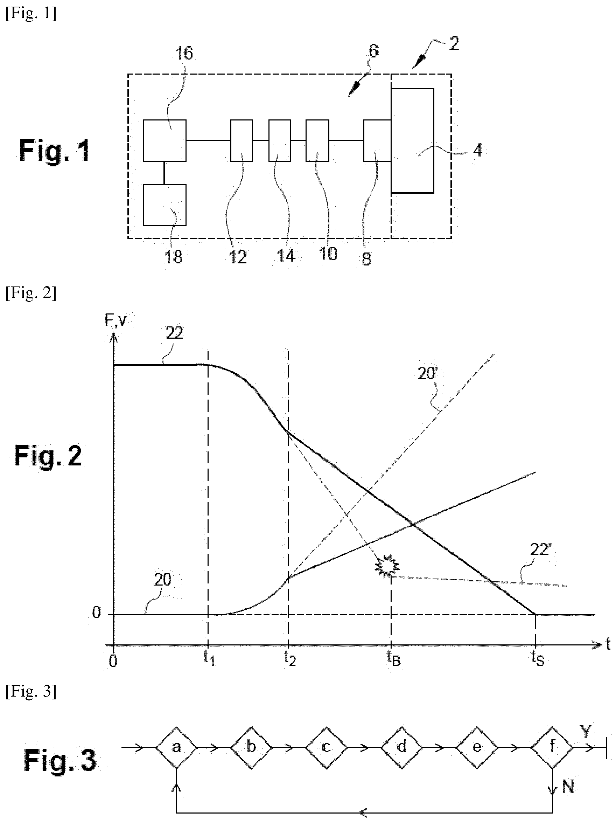

On a représenté en [Fig.1] un véhicule 2 comprenant au moins une roue 4. Le véhicule comporte une ou plusieurs roues mais une seule a été représentée pour ne pas encombrer la présentation de l'invention.

Le véhicule 2 comprend un dispositif de freinage 6 selon l'invention. Celui-ci a pour fonction de permettre de ralentir le véhicule lorsqu'il roule.

Le dispositif de freinage 6 comporte un organe de freinage 8 qui est solidaire de la roue 4. En d'autres termes, l'organe de freinage 8 tourne à la même vitesse que la roue 4. Selon un mode de réalisation, il s'agit, par exemple d'un disque ou bien d'un tambour selon la configuration du dispositif de freinage 6.

Le dispositif de freinage 6 comporte des moyens de friction 10 aptes à venir en contact avec l'organe de freinage 8. Les moyens de friction 10 ne sont pas solidaires de la roue 4. De la sorte, lorsque la roue 4 tourne et les moyens de friction 10 sont en contact l'organe de freinage 8, la friction qui se produit entre les moyens de friction 10 et l'organe de freinage 8 permet une transformation de l'énergie cinétique de la roue 4 en chaleur, ce qui a pour effet de ralentir la roue 4 et donc le véhicule 2. Les moyens de friction 10 sont ici formés par des plaquettes de freinage ou des garnitures de freinage selon la configuration du dispositif de freinage 6.

Le dispositif de freinage 6 comporte un moteur électrique 12, ici un moteur à courant continu, couplé à des moyens d'entrainement 14 connectés aux moyens de friction 10. Les moyens d'entrainement 14 sont agencés de sorte qu'en faisant tourner le moteur électrique 12 dans une première direction, ils approchent les moyens de friction 10 de l'organe de freinage 8 et de sorte qu'en faisant tourner le moteur électrique 12 dans une seconde direction opposée à la première, ils éloignent les moyens de friction 10 de l'organe de freinage 8. Les moyens d'entrainement 14 sont ici formés par un ensemble vis-écrou ou tout autre dispositif similaire permettant de transformer un mouvement de rotation du moteur électrique 12 en un mouvement des moyens de friction 10 en direction de l'organe de freinage 8. Le moteur électrique 12 est alimenté en énergie électrique par des moyens d'alimentation 16.

Le dispositif de freinage 6 comporte un processeur 18 connecté aux moyens d'alimentation 16 et configuré pour commander l'alimentation en énergie du moteur électrique 12 par modulation de largeur d'impulsion. Une telle alimentation consiste en l'alimentation du moteur électrique 12 avec un courant électrique présentant un signal périodique à haute fréquence. Chaque période comporte une première phase lors de laquelle le moteur électrique 12 est alimenté par un courant ayant une intensité prédéterminée et une deuxième phase lors de laquelle le moteur électrique 12 n'est pas alimenté en courant. Le rapport entre la durée de la première phase et la durée de la période est appelé le rapport cyclique de modulation α. Par définition, le rapport cyclique de modulation α prend des valeurs comprises entre 0 et 1, c'est-à-dire entre 0 et 100%. Lors de la première phase de chaque période, le moteur électrique 12 entraine les moyens d'entrainement 14 en mouvement de manière à approcher ou éloigner les moyens de friction 10 de l'organe de freinage 8. Lors de la seconde phase de chaque période, le moteur électrique 12 n'entraine pas les moyens d'entrainement 14 en mouvement. Mais la période a une durée suffisamment faible et l'inertie du moteur électrique 12 est telle qu'il se comporte comme s'il recevait un courant électrique d'intensité égal au courant prédéterminé multiplié par le rapport cyclique de modulation α. On verra dans ce qui suit les avantages liés à ce type d'alimentation en énergie.

On a représenté en [Fig.2] des graphiques qui illustrent la mise en œuvre d'un procédé de freinage selon l'invention. On suppose que le véhicule 2 roule à une vitesse v₀ non nulle et prédéterminée.

A l'instant t=t₁, on amorce le freinage du véhicule 2. Pendant une première phase du freinage, le processeur 18 commande une alimentation du moteur électrique 12 par modulation de largeur d'impulsion avec un rapport cyclique de modulation α₁ fixé à 100%. En d'autres termes, le moteur électrique 12 est alimenté par les moyens d'alimentation 16 avec le courant d'intensité prédéterminée, mentionné dans ce qui précède, en continu. Le moteur électrique 12 tourne et permet aux moyens d'entrainement 14 d'entrainer les moyens de friction 10 en mouvement jusqu'à entrer en contact avec l'organe de freinage 8. La friction entre les moyens de friction 10 et l'organe de freinage 8 permet de ralentir le véhicule 2.

Cette phase de freinage avec un rapport cyclique de modulation α₁ fixé à 100% finit par bloquer la roue 4 du véhicule 2. Comme indiqué dans le préambule de la présente demande, le blocage de la roue 4 pendant le freinage a un impact négatif sur l'efficacité du freinage en ce qu'il rallonge la distance d'arrêt, compromet la stabilité dynamique du véhicule et augmente l'usure des pneumatiques.

Ainsi, à l'instant t=t₂, on amorce une deuxième phase du freinage en fixant le rapport cyclique de modulation à une valeur α₂ strictement comprise entre 0 et 100%, donc différente de 0 et 100%. De la sorte, lors de la deuxième phase, le moteur électrique 12 est alimenté avec un courant électrique dont l'intensité est multipliée par α₂ comparé à la première phase. On comprend que la modulation par largeur d'impulsion permet de réduire la puissance électrique fournie au moteur électrique 12 sans avoir à réduire l'intensité du courant délivré par les moyens d'alimentation 16, ce qui est compliqué à mettre en place. La puissance réduite fait que l'effort d'application des moyens de friction 10 sur l'organe de freinage 8 est lui aussi réduit. La valeur de α₂ est choisie de sorte que cette baisse d'effort soit suffisante pour éviter le blocage de la roue 4. On évite ainsi la fusion de la gomme mentionnée dans le préambule. La deuxième phase se poursuit jusqu'à l'arrêt du véhicule 2 qui se produit à t=tₛ.

Sur la [Fig.2], la courbe 20 représente l'évolution de la force de friction (F) entre les moyens de friction 10 et l'organe de freinage 8 en fonction du temps (t) lors de la mise en œuvre du procédé de freinage. La courbe 22 représente l'évolution de la vitesse (v) du véhicule 2 en fonction du temps (t) lors de la mise en œuvre du procédé de freinage. Les courbes 20' et 22' représentent respectivement les évolutions de la force de friction (F) et de la vitesse (v) du véhicule en fonction du temps (t) dans le cas où le rapport cyclique de modulation est fixé à 100% tout le long du freinage du véhicule. En d'autres termes, les courbes 20' et 22' correspondent à une situation, hors de l'invention, dans laquelle on applique un effort de freinage maximal tout le long du freinage.

Les courbes 22 et 22' illustrent l'avantage principal de l'invention, la réduction du temps de freinage du véhicule 2. On constate en effet que la courbe 22' présente un brusque changement de pente à t=t_{b}. Elle correspond au moment où la gomme de la roue 4 a fondu localement à cause de la chaleur générée par le glissement prolongé de la roue bloquée sur la route. La roue 4 glisse alors sur la route et le freinage n'a plus beaucoup d'effet. Il s'ensuit que la courbe 22' atteint la valeur nulle bien après t=tₛ.

Selon une variante de réalisation de l'invention, on prévoit au moins une phase supplémentaire, faisant suite à la deuxième phase, dans le procédé de freinage. Au cours de cette phase supplémentaire commençant à t=t₃, le rapport cyclique de modulation α₃ est fixé à une valeur prédéterminée strictement comprise entre α₂ et 100%. Cela correspond à une phase où on augmente le rapport cyclique de modulation, et donc la puissance du freinage, par exemple lorsque la vitesse du véhicule a suffisamment diminué pour que le risque de blocage de la roue 4 n'existe plus ou ne soit plus critique. Cela permet d'optimiser encore plus le temps de freinage par rapport au procédé de freinage décrit dans ce qui précède.

Selon une autre variante de réalisation de l'invention, à partir du début de la deuxième phase, on fait évoluer le rapport cyclique de modulation selon une fonction f prédéterminée du temps, par exemple une fonction croissante du temps. Il s'agit d'une version encore plus raffinée de la variante précédente qui permet d'encore plus optimiser le temps de freinage du véhicule 2.

On a représenté en [Fig.3] un ordinogramme illustrant un procédé d'étalonnage du dispositif de freinage 6.

Lors de l'étape a), on fait rouler le véhicule 2 à une vitesse prédéterminée.

Ensuite, lors de l'étape b), on met en œuvre un procédé de freinage du véhicule 2 tel que décrit dans ce qui précède. Selon un mode de réalisation, on fixe les valeurs de t₂, t ₃, α₂, α₃ et de la fonction f selon des modèles théoriques.

L'étape c) consiste en la mesure du temps de freinage du véhicule 2.

A partir de ce résultat, selon l'étape d) on modifie au moins un paramètre choisi parmi la liste suivante : rapport cyclique de modulation lors de la deuxième phase α₂, rapport cyclique de modulation lors de la troisième phase α₃, fonction f, durée de la première phase t₂-t₁, durée de la deuxième phase t₃-t₂. Cette modification est effectuée par toute méthode connue de l'homme du métier. Selon un mode de réalisation, on utilise l'algorithme du simplexe.

Après avoir modifié un ou plusieurs de ces paramètres, l'étape e) consiste à répéter les étapes a) à c), c'est-à-dire qu'on fait rouler le véhicule à la vitesse prédéterminée, on met en œuvre le procédé de freinage selon l'invention et on mesure le temps de freinage. On compare ce dernier au temps de freinage observé avant d'avoir modifié un ou des paramètres pour déterminer si la modification a eu un effet positif ou négatif sur le temps de freinage.

On répète ensuite, selon l'étape f), les étapes a) à e) jusqu'à ce que le temps de freinage soit inférieur à une valeur prédéterminée.

L'invention n'est pas limitée aux modes de réalisation présentés et d'autres modes de réalisation apparaîtront clairement à l'homme du métier.

### Liste de références

2 : véhicule
4 : roue
6 : dispositif de freinage
8 : organe de freinage
10 : moyens de friction
12 : moteur électrique
14 : moyens d'entrainement
16 : moyens d'alimentation
18 : processeur
20, 20' : courbes d'effort de freinage
22, 22' : courbes de vitesse du véhicule

## Revendications

1. Procédé de freinage d'un véhicule (2), dans lequel un moteur électrique (12) entraine en mouvement des moyens de friction (10) en direction d'un organe de freinage (8) solidaire d'une roue (4) du véhicule (2), un processeur (18) commandant une alimentation en énergie du moteur électrique (12) par modulation de largeur d'impulsion, **caractérisé en ce qu'**il comprend une première phase dans laquelle le rapport cyclique de modulation α₁ est fixé à 100% et une deuxième phase dans laquelle le rapport cyclique de modulation α₂ est fixé à une valeur prédéterminée strictement comprise entre 0 et 100%.

2. Procédé selon la revendication précédente, comprenant au moins une phase supplémentaire, faisant suite à la deuxième phase, dans laquelle le rapport cyclique de modulation α₃ est fixé à une valeur prédéterminée strictement comprise entre α₂ et 100%.

3. Procédé selon l'une quelconque des revendications précédentes dans lequel, à partir du début de la deuxième phase, on fait évoluer le rapport cyclique de modulation selon une fonction f prédéterminée du temps, par exemple une fonction croissante du temps.

4. Procédé d'étalonnage d'un dispositif de freinage d'un véhicule (2), dans lequel :
a) on fait rouler le véhicule (2) à une vitesse prédéterminée,
b) on met en œuvre un procédé de freinage, du véhicule (2), selon l'une quelconque des revendications précédentes,
c) on mesure le temps de freinage du véhicule (2),
d) on modifie au moins un paramètre choisi parmi la liste suivante : rapport cyclique de modulation lors de la deuxième phase α₂, fonction f, durée de la première phase, durée de la deuxième phase,
e) on répète les étapes a) à c), et
f) on répète les étapes a) à e) jusqu'à ce que le temps de freinage soit inférieure à une valeur prédéterminée.

5. Dispositif de freinage (6) pour un véhicule (2), comprenant :
- un organe de freinage (8),
- des moyens de friction (10) aptes à venir en contact avec l'organe de freinage (8),
- un moteur électrique (12) apte à entrainer les moyens de friction (10) en mouvement en direction de l'organe de freinage (8), et
- un processeur (18) configuré pour commander l'alimentation en énergie du moteur électrique (12) par modulation de largeur d'impulsion,
**caractérisé en ce que** le processeur est en outre configuré pour commander l'alimentation en énergie du moteur électrique (12) selon une première phase dans laquelle le rapport cyclique de modulation α₁ est fixé à 100% puis selon une deuxième phase dans laquelle le rapport cyclique de modulation α₂ est fixé à une valeur prédéterminée strictement comprise entre 0 et 100%.

6. Dispositif de freinage (6) selon la revendication précédente, dans lequel le processeur (18) est configuré pour commander l'alimentation en énergie du moteur électrique (12) selon au moins une phase supplémentaire, faisant suite à la deuxième phase, dans laquelle le rapport cyclique de modulation α₃ est fixé à une valeur prédéterminée strictement comprise entre α₂ et 100%.

7. Dispositif de freinage (6) selon l'une quelconque des revendications 5 et 6 dans lequel le processeur (18) est configuré pour commander l'alimentation en énergie du moteur électrique (12) en faisant évoluer le rapport cyclique de modulation selon une fonction f prédéterminée du temps, par exemple une fonction croissante du temps, à partir du début de la deuxième phase.

## Patentansprüche

1. Verfahren zum Bremsen eines Fahrzeugs (2), bei dem ein Elektromotor (12) Reibungsmittel (10) in Richtung eines Bremselements (8), das fest mit einem Rad (4) des Fahrzeugs (2) verbunden ist, in Bewegung versetzt, wobei ein Prozessor (18) eine Energieversorgung des Elektromotors (12) durch Pulsbreitenmodulation steuert, **dadurch gekennzeichnet, dass** es eine erste Phase, in der das Modulations-Tastverhältnis α1 auf 100 % festgelegt ist, und eine zweite Phase aufweist, in der das Modulations-Tastverhältnis α2 auf einen vorbestimmten Wert festgelegt ist, der strikt zwischen 0 und 100 % liegt.

2. Verfahren nach dem vorhergehenden Anspruch, das mindestens eine zusätzliche Phase aufweist, die auf die zweite Phase folgt, in der das Modulations-Tastverhältnis α3 auf einen vorbestimmten Wert festgelegt wird, der strikt zwischen α2 und 100% liegt.

3. Verfahren nach einem der vorhergehenden Ansprüche, bei dem ab dem Beginn der zweiten Phase das Modulations-Tastverhältnis gemäß einer vorbestimmten Funktion f der Zeit, z. B. einer steigenden Funktion der Zeit, weiterentwickelt wird.

4. Verfahren zum Kalibrieren einer Bremsvorrichtung eines Fahrzeugs (2), bei dem:
a) das Fahrzeug (2) dazu gebracht wird, mit einer vorbestimmten Geschwindigkeit zu fahren,
b) ein Verfahren zum Bremsen des Fahrzeugs (2) nach einem der vorhergehenden Ansprüche durchgeführt wird,
c) die Bremszeit des Fahrzeugs (2) gemessen wird
d) mindestens ein Parameter aus der folgenden Liste geändert wird: Tastverhältnis der Modulation während der zweiten Phase α2, Funktion f, Dauer der ersten Phase, Dauer der zweiten Phase,
e) die Schritte a) bis c) wiederholt werden, und
f) die Schritte a) bis e) wiederholt werden, bis die Bremszeit kleiner als ein vorbestimmter Wert ist.

5. Bremsvorrichtung (6) für ein Fahrzeug (2), aufweisend:
- ein Bremselement (8),
- Reibungsmittel (10), die in der Lage sind, mit dem Bremselement (8) in Kontakt zu kommen,
- einen Elektromotor (12), der in der Lage ist, die Reibungsmittel (10) in eine Bewegung in Richtung des Bremselements (8) anzutreiben, und
- einen Prozessor (18), der eingerichtet ist, dass er die Energieversorgung des Elektromotors (12) durch Pulsbreitenmodulation steuert,
**dadurch gekennzeichnet, dass** der Prozessor außerdem eingerichtet ist, dass er die Energieversorgung des Elektromotors (12) gemäß einer ersten Phase steuert, in der das Modulations-Tastverhältnis α1 auf 100% festgelegt ist, und dann gemäß einer zweiten Phase, in der das Modulations-Tastverhältnis α2 auf einen vorbestimmten Wert festgelegt ist, der strikt zwischen 0 und 100% liegt.

6. Bremsvorrichtung (6) nach dem vorhergehenden Anspruch, wobei der Prozessor (18) eingerichtet ist, dass er die Energieversorgung des Elektromotors (12) gemäß mindestens einer zusätzlichen Phase steuert, die auf die zweite Phase folgt, in der das Modulations-Tastverhältnis α3 auf einen vorbestimmten Wert streng zwischen α2 und 100% festgelegt ist.

7. Bremsvorrichtung (6) nach einem der Ansprüche 5 oder 6, bei der der Prozessor (18) eingerichtet ist, dass er die Energieversorgung des Elektromotors (12) steuert, indem er das Modulations-Tastverhältnis gemäß einer vorbestimmten Funktion f der Zeit, beispielsweise einer steigenden Funktion der Zeit, ab dem Beginn der zweiten Phase entwickelt.

## Claims

1. A method for braking a vehicle (2), wherein an electric motor (12) drives friction means (10) in motion towards a braking member (8) integral with a wheel (4) of the vehicle (2), a processor (18) controlling an energy supply to the electric motor (12) by pulse width modulation, **characterized in that** it comprises a first phase in which the modulation duty cycle α₁ is set to 100% and a second phase in which the modulation duty cycle α₂ is set to a predetermined value strictly between 0 and 100%.

2. Method according to the preceding claim, comprising at least one additional phase, following the second phase, in which the modulation duty cycle α₃ is set to a predetermined value strictly between α₂ and 100%.

3. Method according to any one of the preceding claims in which, from the start of the second phase, the modulation duty cycle is made to evolve according to a predetermined function f of time, for example an increasing function of time.

4. Method of calibrating a braking device of a vehicle (2), in which :
a) the vehicle (2) is driven at a predetermined speed,
b) the vehicle (2) is braked using a method according to any one of the preceding claims,
c) the braking time of the vehicle (2) is measured,
d) at least one parameter selected from the following list is modified: modulation duty cycle during the second phase α₂, function f, duration of the first phase, duration of the second phase,
e) steps a) to c) are repeated, and
f) steps a) to e) are repeated until the braking time is below a predetermined value.

5. Braking device (6) for a vehicle (2), comprising :
- a braking member (8),
- friction means (10) adapted to come into contact with the braking member (8),
- an electric motor (12) capable of driving the friction means (10) in motion towards the braking member (8), and
- a processor (18) configured to control the power supply to the electric motor (12) by pulse width modulation,
**characterized in that** the processor is further configured to control the power supply to the electric motor (12) according to a first phase in which the modulation duty cycle α₁ is fixed at 100% and then according to a second phase in which the modulation duty cycle α₂ is fixed at a predetermined value strictly between 0 and 100%.

6. Braking device (6) according to the preceding claim, in which the processor (18) is configured to control the power supply to the electric motor (12) according to at least one additional phase, following the second phase, in which the modulation duty cycle α₃ is set to a predetermined value strictly between α₂ and 100%.

7. Braking device (6) according to any one of claims 5 and 6 in which the processor (18) is configured to control the power supply to the electric motor (12) by causing the modulation duty cycle to evolve according to a predetermined function f of time, for example an increasing function of time, from the start of the second phase.
